# FASCICULE DE BREVET EUROPEEN

(11) **EP 3 623 063 B1**
(45) Date de publication et mention de la délivrance du brevet: **01.03.2023**
(21) Numéro de dépôt: 19196696.9
(22) Date de dépôt: 11.09.2019
(51) Int. Cl.: B08B 3/02, B01D 41/04, F01N 3/023

(54) **DISPOSITIF D'ENTRETIEN DE FILTRE À PARTICULES D'UN DISPOSITIF D'ÉCHAPPEMENT DESTINÉ À ÉQUIPER UN MOTEUR À COMBUSTION**
WARTUNGSVORRICHTUNG EINES PARTIKELFILTERS EINER AUSPUFFVORRICHTUNG, DIE FÜR EINEN VERBRENNUNGSMOTOR BESTIMMT IST
DEVICE FOR MAINTENANCE OF A PARTICLE FILTER OF AN EXHAUST DEVICE INTENDED FOR EQUIPPING A COMBUSTION ENGINE

(30) Priorité: 11.09.2018 FR 1858139
(43) Date de publication de la demande: 18.03.2020
(73) Titulaire: Faurecia Systèmes d'Echappement, 92000 Nanterre (FR)
(72) Inventeur: BERTRAND, Dominique, 68700 CERNAY (FR)
(74) Mandataire: Lavoix

(56) Documents cités:
- WO-A1-2008/042371
- WO-A1-2018/139696
- JP-A- 2004 239 072

## Description

La présente invention concerne un dispositif d'entretien de filtre à particules d'un dispositif d'échappement destiné à équiper un moteur à combustion, par exemple de véhicule léger.

Un filtre à particules est destiné à retenir des particules fines contenues dans des gaz de combustion émis par le moteur à combustion. Un tel filtre s'encrasse au cours du temps lors de son utilisation, si bien qu'il est préférable d'effectuer régulièrement un entretien de ce filtre pour limiter cet encrassement et ainsi augmenter sa durée de vie.

A cet effet, on connait des dispositifs d'entretien de filtres à particules, permettant de réaliser un tel entretien.

Des exemples de dispositifs d'entretien sont décrits dans JP 2004 239072A , qui décrit un dispositif selon le préambule de la revendication 1, ou WO 2008/042371.

L'invention a notamment pour but de fournir un dispositif d'entretien particulièrement efficace et économique à mettre en oeuvre.

A cet effet, l'invention a notamment pour objet un dispositif d'entretien selon la revendication 1 et un procédé d'entretien selon la revendication 8.

Ce dispositif permet un entretien préventif du filtre à particules : il ne s'agit pas d'attendre que le filtre soit colmaté pour le régénérer, mais de retarder son colmatage.

Avantageusement, un dispositif d'entretien selon l'invention peut comporter en outre l'une ou plusieurs des caractéristiques suivantes, prises seules ou selon toutes combinaisons techniquement envisageables.
- La buse est une buse à jet rotatif configurée pour projeter le liquide en un jet rotatif.
- Les seconds moyens de fixation de la buse sont configurables en positionnement et/ou en orientation, de manière à orienter le jet de liquide vers le filtre à particules, en fonction des dimensions de la partie de dispositif d'échappement.
- Le couvercle comporte une jupe souple ou une chaussette, un moyen de maintien, de préférence élastique, maintenant la jupe souple ou la chaussette au niveau de l'embouchure.
- Le dispositif de pulvérisation est configuré pour projeter le liquide à une pression prédéterminée comprise entre 50 bars et 120 bars, préférentiellement comprise entre 50 bars et 80 bars, par exemple sensiblement égale à 70 bars.
- Le dispositif d'entretien comporte une enceinte logeant le support et la buse, l'enceinte comprenant une porte d'accès, et une sortie d'évacuation de liquide.
- Le dispositif d'entretien comporte un circuit d'alimentation de la buse, le circuit d'alimentation comprenant un premier élément de connexion et un second élément de connexion, chacun destiné à être connecté à un réservoir de liquide respectif, et une vanne reliant la buse à l'un ou l'autre des premier et second éléments de connexion.
- Les premiers moyens de fixation comportent au moins un premier câble élastique de fixation, par exemple formé par une chaine en élastomère.
- Les premiers moyens de fixation comportent des premiers crochets solidarisés au support, chaque premier crochet étant destiné à recevoir au moins l'un des premiers câbles élastiques de fixation.
- Le support comporte au moins une traverse horizontale.
- Les seconds moyens de fixation comportent au moins un second câble élastique, solidarisé au couvercle et destinés à être solidarisés au support.
- Les seconds moyens de fixation comportent des seconds crochets solidarisés au support, chaque second crochet étant destiné à recevoir au moins l'un des seconds câbles élastiques de fixation.

L'invention concerne également un procédé d'entretien d'un filtre à particules, caractérisé en ce qu'il est réalisé au moyen d'un dispositif d'entretien selon l'une quelconque des revendications précédentes, et en ce qu'il comporte les étapes suivantes :
- fixation de la partie du dispositif d'échappement sur le support, au moyen des premiers moyens de fixation,
- fixation du dispositif de pulvérisation sur la partie de dispositif d'échappement de manière à orienter le jet rotatif vers le filtre à particules,
- projection de liquide par le dispositif de pulvérisation.

Différents aspects et avantages de l'invention seront mis en lumière dans la description qui va suivre, donnée uniquement à titre d'exemple non limitatif, et se référant aux figures annexées, parmi lesquelles :
- la figure 1 est une vue en perspective d'un dispositif d'entretien selon un exemple de mode de réalisation de l'invention,
- la figure 2 représente un filtre à particules disposé dans le dispositif d'entretien de la figure 1, en vue de son entretien.

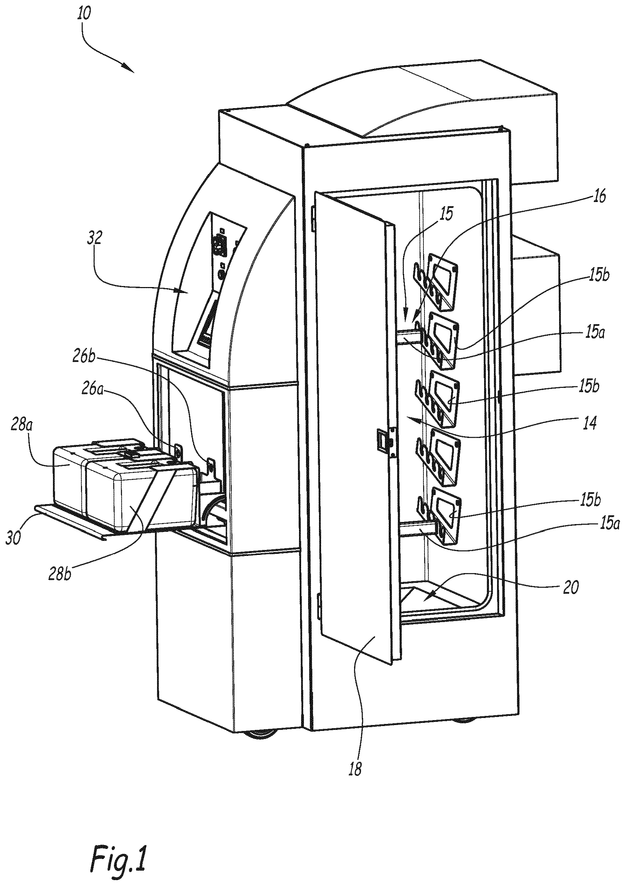

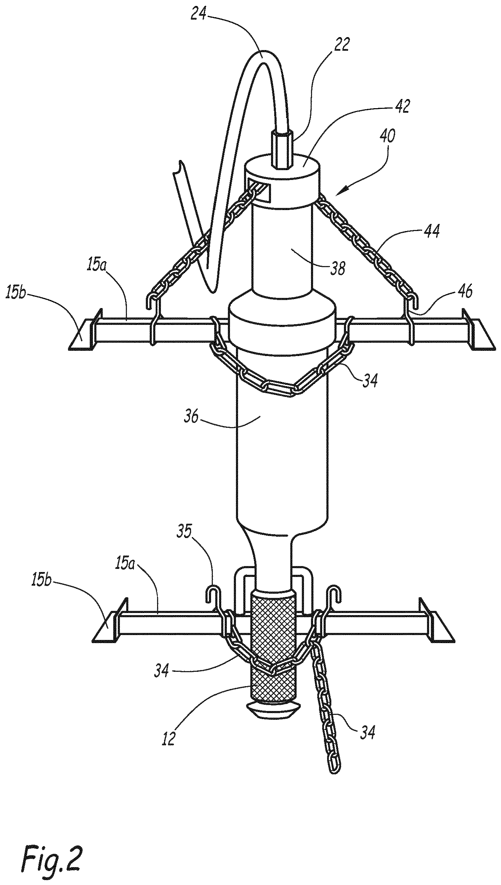

On a représenté, sur la figure 1, un dispositif 10 d'entretien, pour l'entretien d'un filtre à particules 12 (représenté quant à lui sur la figure 2) d'un dispositif d'échappement. Un tel filtre à particules 12 est destiné à équiper un moteur à combustion, notamment de véhicule léger, et plus particulièrement à être agencé en aval de la sortie du moteur à combustion.

Le dispositif d'entretien 10 comporte une enceinte 14, dans laquelle sont logés un support 15 pour le filtre à particules 12, et des premiers moyens 16 de fixation du filtre à particules 12 à ce support 15.

L'enceinte 14 est délimitée par trois parois latérales et par une porte d'accès 18.

Par exemple, l'enceinte 14 présente une hauteur de 1500 cm, et des dimensions latérales de 500 x 500 cm.

En position ouverte, la porte d'accès 18 permet d'accéder à l'intérieur de l'enceinte 14, pour y installer le filtre à particules 12 ou pour l'en extraire.

En position fermée, la porte d'accès 18 permet d'empêcher des projections de liquide d'entretien vers l'extérieur de l'enceinte 14.

L'enceinte 14 comporte par ailleurs, en partie basse, un conduit d'évacuation 20 destiné à récolter le liquide utilisé pour l'entretien du filtre à particules 12. Ce conduit d'évacuation 20 comporte avantageusement une embouchure concave.

Avantageusement, le conduit d'évacuation 20 comporte un dispositif de filtration (non représenté), retenant les particules issues de l'entretien du filtre à particules 12, et laissant passer le liquide d'entretien.

Le conduit d'évacuation 20 est par exemple connecté à une évacuation d'eaux usées classique.

Le support 15 comporte par exemple au moins une traverse horizontale de support 15a, de préférence deux traverses de support 15a, agencées à des hauteurs différentes. L'une des traverses, celle du dessus, sera donc appelée « traverse supérieure », et l'autre traverse, celle du dessus, sera appelée « traverse inférieure ».

Le support 15 comporte par ailleurs des paires d'éléments 15b de fixation des traverses de support 15a, les éléments 15b de chaque paire étant portés par les parois latérales, l'un en face de l'autre. Les paires d'éléments 15b sont alignées dans une direction verticale.

Chaque traverse de support 15a est reliée de manière amovible à l'une respective des paires d'éléments de fixation 15b. Il est ainsi possible de choisir à quelle hauteur est agencée la traverse de support 15a, ce choix étant effectué en fonction des dimensions du filtre à particules 12.

Les premiers moyens de fixation 16 seront décrits ultérieurement plus en détail, en référence à la figure 2.

Le dispositif d'entretien 10 comporte par ailleurs au moins un dispositif de pulvérisation 22. Dans l'exemple décrit, le dispositif de pulvérisation 22 comporte au moins une buse à jet rotatif 22, destinée à projeter un jet rotatif de liquide d'entretien à une pression prédéterminée. Le principe d'une telle buse 22 est connu en soi et ne sera pas décrit en détail. La buse 22 comporte notamment une tête de buse, pourvue d'un élément rotatif sous l'effet de la pression de liquide d'entretien à projeter.

La buse 22 est par exemple amovible, et peut être remplacée par une autre buse, en fonction de l'utilisation. Un type de buse peut par exemple être utilisé pour projeter un liquide de lavage, et un autre type de buse pour projeter un liquide de rinçage.

Un autre type de buse envisageable est une buse de type « pommeau de douche », comportant une pluralité d'orifices de passage de liquide pour projeter le liquide en une multitude de mini jets.

La buse 22 est reliée à un circuit d'alimentation en liquide d'entretien, par une conduite d'alimentation 24.

Dans l'exemple décrit, le circuit d'alimentation comprend un premier élément de connexion 26a destiné à être connecté à un premier réservoir de liquide 28a, et un second élément de connexion 26b destiné à être connecté à un second réservoir de liquide 28b.

Dans ce cas, le premier réservoir 28a contient de préférence un liquide différent de celui contenu par le second réservoir 28b. Par exemple, le premier réservoir 28a contient une première solution aqueuse, destinée au lavage du filtre à particules 12, et le second réservoir 18b contient une seconde solution aqueuse, destinée au rinçage du filtre à particules 12.

La première solution aqueuse comprend par exemple au moins un additif, avantageusement un additif écologique. Par « additif écologique », on entend un additif qui respecte l'environnement et peut être rejeté sans nécessiter un traitement particulier.

La seconde solution aqueuse comprend par exemple de l'acide citrique.

Les premier 28a et second 28b réservoirs sont connectés alternativement à la buse 22, par exemple grâce à au moins une vanne (non représentée) reliant la buse 22 à l'un ou l'autre des premier 26a et second 26b éléments de connexion.

Avantageusement, chaque réservoir 28a, 28b comporte une étiquette électronique, notamment de type RFID, et le dispositif d'entretien 10 comporte au moins un lecteur d'étiquette électronique. Ainsi, il est possible de vérifier que les liquides contenus dans les réservoirs sont bien adaptés à l'entretien, par exemple vérifier que les réservoirs 28a, 28b n'ont pas été accidentellement intervertis.

Conformément à une variante non représentée, le dispositif de traitement 10 pourrait comporter un seul réservoir, ou plus de deux réservoirs. Dans une autre variante, les deux réservoirs pourraient contenir le même liquide.

Avantageusement, le dispositif d'entretien 10 comporte un plateau 30 de support des réservoirs 28a, 28b. Ce plateau de support 30 est par exemple mobile autour d'une liaison pivot entre une position ouverte d'utilisation, représentée sur la figure 1, dans laquelle il supporte chaque réservoir 28a, 28B, et une position fermée de rangement, dans laquelle ce plateau de support 30 masque l'accès aux éléments de connexion 26a, 26b.

Le dispositif d'entretien 10 comporte par ailleurs un panneau de commande 32, comportant des commandes pour un utilisateur. Ce panneau de commande 32 permet notamment de commander la mise en fonctionnement du dispositif d'entretien 10, son arrêt et/ou son arrêt d'urgence, et toute autre commande envisageable.

De préférence, le dispositif d'entretien 10 est automatisé, réalisant le cycle d'entretien dans son intégralité sans nécessité d'intervention de l'utilisateur.

Les premiers moyens de fixation 16 vont maintenant être décrits, en référence à la figure 2.

Ces premiers moyens de fixation 16 permettent une fixation verticale du filtre à particules 12, de sorte que le liquide projeté dans ce filtre à particules 12 s'écoule vers le conduit d'évacuation 20.

Les premiers moyens de fixation 16 comportent au moins un premier câble élastique de fixation 34, par exemple formé par une chaine en élastomère. L'élasticité du câble de fixation 34 permet d'assurer un bon serrage du filtre à particules 12 sur le support 15.

Les premiers moyens de fixation 16 comporte également de préférence des premiers crochets 35 permettant le blocage du premier câble 34. Par exemple, le premier câble 34, formé par une chaîne en élastomère, comporte des maillons, au moins l'un des premiers crochets étant engagé dans au moins l'un des maillons.

Chaque premier crochet 35 est porté par le support 15, par exemple par l'une des traverses 15a. Chaque premier crochet 35 est de préférence déplaçable le long de la traverse 15a correspondante. Par exemple, le premier crochet 35 est porté par un anneau enfilé sur la traverse 15a correspondante.

Il est à noter que le filtre à particules 12 est généralement solidaire d'un dispositif 36 de réduction de bruit. Le filtre à particules 12 et le dispositif de réduction de bruit 36 forment ensemble une partie de dispositif d'échappement. C'est cette partie de dispositif d'échappement qui est fixée au support 15.

Plus particulièrement, le dispositif de réduction de bruit 36 est de préférence fixé à la traverse supérieure, et le filtre à particules 12 est de préférence fixé à la traverse inférieure. La distance entre les traverses supérieure et inférieure dépend donc de la longueur de ladite partie de dispositif d'échappement.

La partie de dispositif d'échappement comporte également un tube 38 de sortie des gaz d'échappement, s'étendant entre le dispositif de réduction de bruit 36 et une embouchure.

Le dispositif de maintenance 10 comporte par ailleurs des seconds moyens 40 de fixation de la buse 22 sur la partie de dispositif d'échappement, et plus particulièrement sur le tube 38.

Les seconds moyens de fixation 40 comportent un couvercle 42, conformé pour recouvrir l'embouchure du tube de sortie 38. La buse 22 est fixée à ce couvercle 42, la tête de buse traversant ce couvercle 42. Ainsi, la tête de buse est introduite à travers cette embouchure, dans le tube de sortie 38, lors que le couvercle 42 recouvre cette embouchure, comme cela est représenté sur la figure 2. Le jet rotatif est alors orienté vers le filtre à particules 12.

Avantageusement, le dispositif d'entretien 10 comporte un jeu de couvercles amovibles, ledit couvercle 42 étant choisi parmi ce jeu de couvercles en fonction des dimensions de l'embouchure.

De préférence, le couvercle 42 comporte une jupe souple ou une chaussette, un moyen de maintien, de préférence élastique, maintenant la jupe souple ou la chaussette au niveau de l'embouchure.

Les seconds moyens de fixation 40 comportent par ailleurs au moins un second câble élastique 44. Chaque second câble 44 est solidarisé au couvercle 42, et destinés à être solidarisés au support 15.

Plus particulièrement, les seconds moyens de fixation 40 comportent au moins un second crochet 46 porté par le support 15, par exemple par l'une des traverses 15a, et de préférence par la traverse supérieure.

Chaque second crochet 46 est de préférence déplaçable le long de la traverse 15a correspondante. Par exemple, le second crochet 46 est porté par un anneau enfilé sur la traverse 15a correspondante.

Par exemple, le second câble 44, formé par une chaîne en élastomère, comporte des maillons, au moins l'un des seconds crochets 46 étant engagé dans au moins l'un des maillons.

Dans l'exemple décrit, les seconds moyens de fixation 40 comportent deux seconds câbles 44, s'étendant chacun, de part et d'autre du couvercle 42, depuis ce couvercle 42 jusqu'à l'un respectif des seconds crochets 46. Ces seconds câbles 44 sont tendus de sorte que le couvercle 42 reste plaqué contre l'embouchure du tube de sortie 38.

Un exemple de procédé d'entretien du filtre à particules 12, au moyen du dispositif d'entretien 10 décrit précédemment, va maintenant être décrit.

Tout d'abord, le filtre à particules 12 est démonté du moteur à combustion. Pour éviter des opérations de démontage supplémentaires, le filtre à particules 12 reste solidarisé au dispositif de réduction de bruit 36 et au tube de sortie 38, qui forment ensemble ladite partie de dispositif d'échappement.

La partie de dispositif d'échappement est ensuite rapportée dans le dispositif d'entretien 10. Après ouverture de la porte 18, les traverses 15a sont fixées aux éléments de fixation 15b adaptés à la longueur de ladite partie de dispositif d'échappement.

La partie de dispositif d'échappement est alors fixée au support 15 à l'aide des premiers moyens de fixation. Plus particulièrement, le dispositif de réduction de bruit 36 est fixé à la traverse supérieure au moyen du premier câble 34, et le filtre à particules 12 est fixé à la traverse inférieure au moyen du premier câble 34 (le même que pour la fixation du dispositif de réduction de bruit 36, ou en variante un autre premier câble 34).

La buse 22 est ensuite rapportée sur le tube 38 et fixée en position par les seconds moyens de fixation 40. A cet effet, le couvercle 42 recouvre l'embouchure du tube de sortie 38, et les seconds câbles 44 sont tendus pour être accrochés aux seconds crochets 46.

Une fois la partie de dispositif d'échappement en place, la porte 18 est refermée.

Les réservoirs 28a, 28b sont alors mis en place et connectés aux éléments de connexion 26a, 26b correspondants. Chaque réservoir présente par exemple une contenance de 10 Litres, si bien que 20 Litres sont utilisés pour une maintenance par le dispositif de maintenance 10 selon l'invention.

Le cycle de maintenance peut alors débuter.

Au cours d'une première phase de lavage, la buse 22 est connectée au premier réservoir 28a, pour projeter le liquide contenu dans ce premier réservoir. Ce liquide est projeté avec une pression par exemple comprise entre 50 bars et 120 bars, préférentiellement comprise entre 50 bars et 80 bars, par exemple sensiblement égale à 70 bars.

Les inventeurs ont noté que cette gamme de pression permet un nettoyage optimal du filtre à particules 12, tout en évitant un endommagement de ce filtre à particules 12.

La température du liquide d'entretien est préférentiellement la température ambiante, c'est-à-dire la température de l'environnement du dispositif, par exemple comprise entre 15°C et 25°C. En d'autres termes, le liquide d'entretien n'est pas chauffé avant d'être projeté à l'intérieur de la partie du dispositif d'échappement.

Une fois le premier réservoir vidé, la buse 22 est connectée au second réservoir 28b. Le changement de réservoir est de préférence effectué automatiquement, mais il pourrait en variante être effectué manuellement. On passe alors à une phase de rinçage, dans laquelle la buse 22 projette alors le liquide contenu dans ce second réservoir. Ce liquide est projeté avec une pression de préférence similaire à celle employée pour projeter le liquide du premier réservoir, notamment comprise entre 50 bars et 120 bars, préférentiellement comprise entre 50 bars et 80 bars, par exemple sensiblement égale à 70 bars, et par exemple à température ambiante, notamment entre 15°C et 25°C.

On notera que l'ensemble de la phase de lavage et de rinçage dure environ 1mn30.

Durant les phases de lavage et de rinçage, le liquide est projeté à haute pression dans la partie de dispositif d'échappement, avec un jet rotatif qui permet un lavage optimal du filtre à particules, et plus particulièrement des cendres présentes dans le filtre à particules.

Le liquide traversant le filtre à particules, chargé en cendres, tombe dans le conduit d'évacuation 20, où il est filtré avant d'être rejeté dans le système d'eaux usées.

Une fois la phase de rinçage terminée, la porte 18 est ouverte, et la partie de dispositif d'échappement est détachée du support 15, avant d'être remontée sur le moteur à combustion.

De préférence, le séchage est effectué sur le moteur à combustion, une fois la partie de dispositif d'échappement remontée en sortie de ce moteur à combustion. A cet effet, on fait tourner le moteur, d'abord à bas régime, pendant une première durée par exemple de 15 minutes, puis à haut régime, par exemple à 3000 tours par minute, pendant une seconde durée, par exemple 3 minutes.

On notera que l'invention n'est pas limitée à l'exemple précédemment décrit, mais pourrait présenter diverses variantes complémentaires sans sortir du cadre des revendications.

En particulier, dans l'exemple décrit précédemment, le support 15 est fixe alors que la buse 22 est déplaçable pour venir s'agencer sur la partie de dispositif d'échappement. En variante, la buse 22 est fixe, et le support 15 est mobile pour pouvoir apporter la partie de dispositif d'échappement en sortie de la buse.

Conformément à une autre variante non représentée, le dispositif d'entretien 10 comporte une pluralité de dispositifs de pulvérisation, par exemple présentant des orientations différentes.

En variante encore, le dispositif selon l'invention est adapté à l"entretien d'un filtre à particules d'un dispositif d'échappement destiné à équiper un moteur à combustion d'un camion.

La partie du dispositif d'échappement est alors par exemple une cartouche du filtre à particules du camion.

Le dispositif d'entretien selon l'invention est particulièrement avantageux car il permet un entretien facile et rapide du filtre à particules et permet de prolonger la durée de vie du filtre à particules.

De plus, le nettoyage s'effectue rapidement.

Par ailleurs, le dispositif d'entretien est particulièrement respectueux de l'environnement. En effet, les volumes de liquides d'entretien utilisés sont faibles et les liquides d'entretien utilisés ne contiennent pas de produits nocifs pour l'environnement. Ainsi, après filtrage, les effluents ne nécessitent pas un traitement particulier et peuvent être évacués dans le tout à l'égout.

Le support du dispositif selon l'invention est également particulièrement avantageux car il permet la fixation rapide d'une partie de dispositif d'échappement de n'importe quelle dimension.

## Revendications

1. Dispositif (10) d'entretien d'un filtre à particules (12) d'un dispositif d'échappement destiné à équiper un moteur à combustion, comportant :
- un support (15) pour une partie du dispositif d'échappement comprenant le filtre à particules (12), et des premiers moyens de fixation de ladite partie de dispositif d'échappement sur le support (15),
- au moins un dispositif de pulvérisation , configuré pour projeter un liquide à une pression prédéterminée, comportant au moins une buse (22),
des seconds moyens de fixation de la buse, **caractérisé en ce que** les seconds moyens de fixation comportent un couvercle (42), la buse (22) comportant une tête de buse traversant le couvercle (42), le couvercle (42) étant conformé pour recouvrir une embouchure de la partie de dispositif d'échappement, de sorte que la tête de buse soit introduite à travers cette embouchure lorsque le couvercle (42) recouvre cette embouchure et **en ce que** le dispositif d'entretien (10) comporte un jeu de couvercles amovibles, ledit couvercle (42) étant choisi parmi ce jeu de couvercles en fonction des dimensions de l'embouchure.

2. Dispositif d'entretien (10) selon la revendication 1, dans lequel la buse (22) est une buse à jet rotatif configurée pour projeter le liquide en un jet rotatif.

3. Dispositif d'entretien (10) selon l'une quelconque des revendications précédentes, dans lequel les seconds moyens de fixation de la buse sont configurables en positionnement et/ou en orientation, de manière à orienter le jet de liquide vers le filtre à particules (12), en fonction des dimensions de la partie de dispositif d'échappement.

4. Dispositif d'entretien (10) selon l'une quelconque des revendications précédentes, dans lequel le couvercle (42) comporte une jupe souple ou une chaussette, un moyen de maintien, de préférence élastique, maintenant la jupe souple ou la chaussette au niveau de l'embouchure.

5. Dispositif d'entretien (10) selon l'une quelconque des revendications précédentes, dans lequel le dispositif de pulvérisation (22) est configuré pour projeter le liquide à une pression prédéterminée comprise entre 50 bars et 120 bars, préférentiellement comprise entre 50 bars et 80 bars, par exemple sensiblement égale à 70 bars.

6. Dispositif d'entretien (10) selon l'une quelconque des revendications précédentes, comportant une enceinte (14) logeant le support (15) et la buse (22), l'enceinte (14) comprenant une porte d'accès (18), et une sortie (20) d'évacuation de liquide.

7. Dispositif d'entretien (10) selon l'une quelconque des revendications précédentes, comportant un circuit d'alimentation de la buse (22), le circuit d'alimentation comprenant un premier élément de connexion (26a) et un second élément de connexion (26b), chacun destiné à être connecté à un réservoir (28a, 28b) de liquide respectif, et une vanne reliant la buse (22) à l'un ou l'autre des premier (26a) et second (26b) éléments de connexion.

8. Procédé d'entretien d'un filtre à particules, réalisé au moyen d'un dispositif d'entretien (10) selon l'une quelconque des revendications précédentes, et comportant les étapes suivantes :
- fixation de la partie du dispositif d'échappement sur le support (15), au moyen des premiers moyens de fixation,
- fixation du dispositif de pulvérisation (22) sur la partie de dispositif d'échappement de manière à orienter le jet rotatif vers le filtre à particules (12),
- projection de liquide par le dispositif de pulvérisation (22).

## Patentansprüche

1. Wartungsvorrichtung (10) eines Partikelfilters (12) einer Abgasvorrichtung, die dazu bestimmt ist, einen Verbrennungsmotor auszurüsten, umfassend:
- eine Halterung (15) für einen Teil der Abgasvorrichtung, die den Partikelfilter (12) umfasst, und erste Befestigungseinrichtungen des Teils der besagte Abgasvorrichtung an der Halterung (15),
- mindestens eine Sprühvorrichtung, die konfiguriert ist, um eine Flüssigkeit mit einem vorbestimmten Druck auszustoßen, umfassend mindestens eine Düse (22), zweite Befestigungseinrichtungen der Düse, **dadurch gekennzeichnet, dass** die zweiten Befestigungseinrichtungen einen Deckel (42) umfassen, die Düse (22) umfassend einen Düsenkopf, der den Deckel (42) durchquert, wobei der der Deckel (42) ausgebildet ist, um eine Mündung des Teils der Abgasvorrichtung abzudecken, sodass der Düsenkopf durch diese Mündung eingeführt wird, wenn der Deckel (42) diese Mündung abdeckt, und dass die Wartungsvorrichtung (10) einen Satz abnehmbarer Deckel umfasst, wobei der Deckel (42) abhängig von den Abmessungen der Mündung aus diesem Satz von Deckeln ausgewählt wird.

2. Wartungsvorrichtung (10) nach Anspruch 1, wobei die Düse (22) eine Rotationsstrahldüse ist, die konfiguriert ist, um die Flüssigkeit in einem Rotationsstrahl auszustoßen.

3. Wartungsvorrichtung (10) nach einem der vorherigen Ansprüche, wobei die zweiten Befestigungseinrichtungen in ihrer Positionierung und/oder Ausrichtung konfigurierbar sind, um den Flüssigkeitsstrahl abhängig von den Abmessungen des Teils der Abgasvorrichtung in Richtung des Partikelfilters (12) auszurichten.

4. Wartungsvorrichtung (10) nach einem der vorherigen Ansprüche, wobei der Deckel (42) eine weiche Schürze oder einen Stutzen aufweist, wobei eine vorzugsweise elastische Halteeinrichtung die weiche Schürze oder den Stutzen an der Mündung hält.

5. Wartungsvorrichtung (10) nach einem der vorherigen Ansprüche, wobei die Sprühvorrichtung (22) konfiguriert ist, um die Flüssigkeit bei einem vorbestimmten Druck zwischen 50 bar und 120 bar, vorzugsweise zwischen 50 bar und 80 bar, z. B. im Wesentlichen gleich 70 bar, auszustoßen.

6. Wartungsvorrichtung (10) nach einem der vorherigen Ansprüche, umfassend eine Einfassung (14), die die Halterung (15) und die Düse (22) aufnimmt, die Einfassung (14) umfassend eine Zugangsklappe (18), und einen Auslass (20) zum Ablassen von Flüssigkeit.

7. Wartungsvorrichtung (10) nach einem der vorherigen Ansprüche, umfassend einen Versorgungskreislauf für die Düse (22), der Versorgungskreislauf umfassend ein erstes Verbindungselement (26a) und ein zweites Verbindungselement (26b), die jeweils mit einem entsprechenden Flüssigkeitsbehälter (28a, 28b) verbunden werden sollen, und ein Ventil, das die Düse (22) mit dem ersten (26a) oder dem zweiten (26b) Verbindungselement verbindet.

8. Verfahren zur Wartung eines Partikelfilters, das mittels einer Wartungsvorrichtung (10) nach einem der vorherigen Ansprüche durchgeführt wird und umfassend die folgenden Schritte:
- Befestigen des Teils der Abgasvorrichtung an der Halterung (15) mittels der ersten Befestigungseinrichtungen,
- Befestigen der Sprühvorrichtung (22) an dem Teil der Abgasvorrichtung, um den rotierenden Strahl auf den Partikelfilter (12) auszurichten,
- Ausstoßen von Flüssigkeit durch die Sprühvorrichtung (22).

## Claims

1. A device (10) for servicing a particulate filter (12) of an exhaust system for an internal combustion engine, comprising:
- a support (15) for a part of the exhaust system including the particulate filter (12), and first means for fixing said exhaust system part to the support (15),
- at least one spray device, configured to spray a liquid at a predetermined pressure, comprising at least one nozzle (22), second means for fixing the nozzle, **characterized in that** the second fixing means comprise a cover (42), the nozzle (22) comprising a nozzle head passing through the cover (42), the cover (42) being shaped to cover a mouth of the exhaust system part, so that the nozzle head is inserted through this mouth when the cover (42) covers this mouth, and **in that** the servicing device (10) comprises a set of removable covers, said cover (42) being selected from this set of covers according to the dimensions of the mouth.

2. The servicing device (10) according to claim 1, wherein the nozzle (22) is a rotary jet nozzle configured to project the liquid in a rotary jet.

3. The servicing device (10) according to any one of the preceding claims, wherein the second nozzle attachment means are configurable in positioning and/or orientation, so as to direct the liquid jet towards the particulate filter (12), depending on the dimensions of the exhaust system part.

4. The servicing device (10) according to any one of the preceding claims, wherein the cover (42) comprises a soft skirt or sock, a holding means, preferably elastic, holding the soft skirt or sock at the mouth.

5. The servicing device (10) according to any one of the preceding claims, wherein the spray device (22) is configured to spray the liquid at a predetermined pressure between 50 bar and 120 bar, preferably between 50 bar and 80 bar, for example substantially equal to 70 bar.

6. The servicing device (10) according to any of the preceding claims, comprising an enclosure (14) housing the holder (15) and the nozzle (22), the enclosure (14) comprising an access door (18), and a liquid discharge outlet (20).

7. The servicing device (10) according to any one of the preceding claims, comprising a supply circuit for the nozzle (22), the supply circuit comprising a first connection element (26a) and a second connection element (26b), each intended to be connected to a respective liquid reservoir (28a, 28b), and a valve connecting the nozzle (22) to either the first (26a) or second (26b) connection elements.

8. A method of servicing a particulate filter, performed by means of a servicing device (10) according to any of the preceding claims, and comprising the following steps:
- fixing the exhaust system part to the support (15) by means of the first fixing means,
- fixing the spray device (22) to the exhaust system part in such a way that the rotating jet is directed towards the particulate filter (12),
- the liquid is sprayed by the spray device (22).
